# EUROPEAN PATENT SPECIFICATION

(11) **EP 3 633 281 B1**
(45) Date of publication and mention of the grant of the patent: **27.12.2023**
(21) Application number: 18810374.1
(22) Date of filing: 24.05.2018
(51) Int. Cl.: F24F 11/67, F24F 11/49, F24F 11/30, F24F 11/77, F24F 11/80, F24F 11/58, F24F 11/62, F24F 11/64, F24F 110/10, F24F 120/00

(54) **CENTRAL AIR-CONDITIONING TEMPERATURE CONTROL DEVICE, FAN COIL CONTROL METHOD, MEDIUM AND SYSTEM**
ZENTRALE KLIMATISIERUNGSTEMPERATURSTEUERUNGSVORRICHTUNG, GEBLÄSESPULENSTEUERUNGSVERFAHREN, MEDIUM UND SYSTEM
DISPOSITIF DE RÉGULATION DE TEMPÉRATURE DE CLIMATISATION CENTRALE, PROCÉDÉ DE COMMANDE DE VENTILO-CONVECTEUR, SUPPORT ET SYSTÈME

(30) Priority: 31.05.2017 CN 201710400466
(43) Date of publication of application: 08.04.2020
(73) Proprietor: ZTE Corporation, Shenzhen, Guangdong 518057 (CN)
(72) Inventor: YI, Zhe, Shenzhen Guangdong 518057 (CN); TANG, Xiong, Shenzhen Guangdong 518057 (CN); GUO, Dandan, Shenzhen Guangdong 518057 (CN); LAI, Pengcheng, Shenzhen Guangdong 518057 (CN); CHENG, Wenyuan, Shenzhen Guangdong 518057 (CN)
(74) Representative: Aipex B.V.
(86) International application number: PCT/CN2018/088292
(87) International publication number: WO 2018/219213

(56) References cited:
- CN-A- 1 632 395
- CN-A- 1 632 399
- CN-A- 104 570 755
- CN-A- 104 596 046
- CN-A- 104 596 046
- CN-A- 104 597 763
- CN-A- 105 172 819
- CN-A- 105 352 139
- CN-A- 106 196 463
- CN-U- 203 068 732
- CN-Y- 201 003 837
- JP-A- 2005 180 770
- KR-B1- 100 802 159
- KR-B1- 101 294 291
- US-A1- 2016 320 086

## Description

### TECHNICAL FIELD

The present invention relates to the technical field of central air conditioners, in particular, to a central air conditioning temperature control apparatus, a method for controlling a fan coil and a computer-readable storage medium therefor.

### BACKGROUND

A fan coil of a central air conditioner is a most common end product of the central air conditioner, and consists of a heat exchanger, a water pipe, a filter, a fan, a water tray, a vent valve, a bracket, etc. The working principle of the fan coil is that the air in the room or outside is continuously recirculated in the unit, so that the air is cooled (heated) after passing through the cold water (hot water) coil to keep the temperature of the room constant.

In order to control the running of the fan coil, in the existing art, a temperature controller panel with a single chip microcomputer is installed on the wall near the fan opening, and the temperature controller panel has several buttons such as a switch, wind speed gears, and temperature addition and subtraction buttons and a liquid crystal screen displaying temperature. A user controls the running of the fan coil by manual operation.

In the existing control manner of the fan coil remote control cannot be achieved, the operation is cumbersome, the networking cost is high, and the operation process is time consuming and labor intensive. Examples are given as follows. 1. The user needs to find the temperature controller panel corresponding to the fan opening to perform control, and cannot perform remote control. 2. The distance between the fan opening and the temperature controller panel is far, special wiring is needed, and the cost of networking is relatively large. 3. The temperature controller needs to manually set the running state (heating, cooling, ventilation), the wind speed (high-gear, mid-gear, low-gear) and temperature. 4. For the government or enterprise users of central air conditioners, when the fan coil needs to be turned off after the users get off work in the evening, the fan coil needs to be checked by a special person, and then manually turned off, which consumes manpower. 5. Anyone may operate the fan coil to run, and no authority control exists. 6. Anyone may set the temperature of the temperature controller at will, and unreasonable temperature setting will increase the energy consumption of the central air conditioner.

In the Korean patent "APPARATUS FOR CONTROLLING AIR CONDITIONER AND FAN COIL UNIT" (KR101294291), the apparatus can control the coordination and fan coil unit. The coordination and the fan coil control device of the present invention comprise the sensor unit detecting the indoor temperature of the specified zone and the control unit which together controls the first coordination means reaching the indoor temperature to the preset temperature in the driving for the first period and the second coordination means reaching the indoor temperature to the preset temperature in the driving for the second time.

### SUMMARY

Embodiments of the present invention provide a temperature control apparatus of a central air conditioner according to claim 11, a method for controlling a fan coil according to claim 1, and a computer-readable storage medium according to claim 13. Preferred embodiments of the invention are provided in the dependent claims.

Embodiments of the present invention have the following beneficial effects.

According to the apparatus, the method, and the storage medium in the embodiments of the present invention, the running state of the temperature control apparatus is configured through the control terminal, or the running state of the temperature control apparatus is automatically configured, so the problems that the existing temperature controller needs to be manually configured and that the configuration process is troublesome are effectively solved.

### BRIEF DESCRIPTION OF DRAWINGS

FIG. 1 is a schematic structural diagram of a temperature control apparatus of a central air conditioner according to an embodiment of the present invention;
FIG. 2 is a schematic layout diagram of a temperature control system of a central air conditioner according to an embodiment of the present invention;
FIG. 3 is a schematic structural diagram of a temperature control apparatus of a central air conditioner according to an embodiment of the present invention;
FIG. 4 is a schematic diagram of an APP main interface of a control terminal according to an embodiment of the present invention;
FIG. 5 is a schematic diagram of an APP configuration interface of a control terminal according to an embodiment of the present invention;
FIG. 6 is a flowchart of determining a network state by a control terminal according to an embodiment of the present invention;
FIG. 7 is a schematic structural diagram of a temperature control system of a central air conditioner according to an embodiment 3 of the present invention;
FIG. 8 is a flowchart of configuring a fan coil according to the embodiment 3 of the present invention; and
FIG. 9 is a flowchart of a method for controlling a fan coil according to an embodiment of the present invention.

### DETAILED DESCRIPTION

In order to solve the problems in the existing art, the present invention provides a temperature control apparatus of a central air conditioner, a method for controlling a fan coil and a medium, and the present invention will be further described below with reference to the drawings and embodiments. It is to be understood that the embodiments described herein are intended to explain and not to limit the present invention.

### Embodiment 1

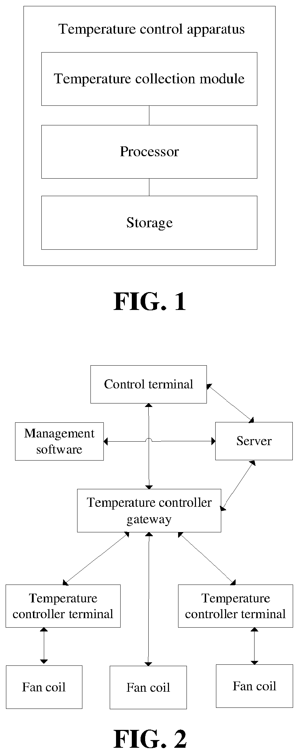

As shown in FIG. 1, an embodiment of the present invention provides a temperature control apparatus of a central air conditioner, and the temperature control apparatus includes a temperature collection module, a storage and a processor.

The temperature collection module is configured to collect ambient temperature according to a set period.

The storage is configured to store a fan coil control program, and the processor is configured to execute the fan coil control program to implement the following steps.

If the temperature control apparatus is in a non-automatic working mode, a configuration instruction is received via a network, and a running state of the temperature control apparatus is configured according to the configuration instruction.

If the temperature control apparatus is in an automatic working mode, a change trend of the ambient temperature is determined according to the collected ambient temperature; and the running state of the temperature control apparatus is configured according to the change trend of the ambient temperature.

A corresponding control signal is sent to a fan coil connected with the temperature control apparatus according to the configured running state so as to enable the fan coil to start an action corresponding to the running state.

The temperature collection module may be a temperature sensor, and the storage may be externally configured.

The control terminal may employ any known terminal, such as a mobile phone and other mobile terminals. About the network, a wireless network may be adopted.

The running state includes a cooling state, a heating state, and a ventilation state.

The corresponding action of the running state may be opening or closing a solenoid valve of the fan coil, turning on or turning off a fan of the fan coil, or configuring a working speed of the fan.

The configuration instruction may include a cooling command, a heating command, a ventilation command, and the like. In addition, the configuration instruction may further include: a switch-on instruction, a switch-off instruction, a timing instruction (including timing switch-on and timing switch-off), an entering-automatic-mode instruction, and an exiting- -automatic-mode instruction. After the temperature control apparatus receives the corresponding instruction, the working mode (also referred to as the running state) of the temperature control apparatus is configured.

The temperature control apparatus may be a temperature controller terminal (also referred to as a temperature controller) or a temperature controller gateway.

The non-automatic working mode indicates that for the temperature controller, the running state of the temperature controller needs to be configured by a user through the control terminal.

The automatic working mode indicates that for the temperature controller, the running state of the temperature controller does not need to be configured by the user through the control terminal, and the temperature controller may configure the running state of the temperature controller itself according to the change trend of the ambient temperature.

According to the embodiments of the present invention, the running state of the temperature control apparatus is configured through the control terminal, or the running state of the temperature control apparatus is automatically configured according to the change trend of the ambient temperature, so the problem that the existing temperature controller needs manual configuration is effectively solved and the control convenience of the existing temperature controller is improved.

In other embodiments, the step of determining a change trend of the ambient temperature according to the collected ambient temperature includes the following steps.

Collected ambient temperature is obtained at each period node.

The change trend of the ambient temperature is determined according to the ambient temperature of the each period node.

In other embodiments, the step of configuring the running state of the temperature control apparatus according to the change trend of the ambient temperature includes the following steps.

If the change trend of the ambient temperature is a decreasing trend, the running state of the temperature control apparatus is configured to the cooling state, and a target cooling temperature is configured.

If the change trend of the ambient temperature is an increasing trend, the running state of the temperature control apparatus is configured to the heating state, and a target heating temperature is configured.

If the change trend of the ambient temperature is a flat trend, the running state of the temperature control apparatus is configured to the ventilation state.

In other embodiments, the determining manner of the change trend of the ambient temperature includes the following manners.

During a preset determining period, if the decreasing amplitude of the ambient temperature reaches a preset cooling threshold, the change trend of the ambient temperature is the decreasing trend.

During the preset determining period, if the increasing amplitude of the ambient temperature reaches a preset heating threshold, the change trend of the ambient temperature is the increasing trend.

During the preset determining period, if the change amplitude of the ambient temperature is within a preset ventilation threshold range, the change trend of the ambient temperature is the flat trend.

One determining period may be comprised of two adjacent period nodes, or may be comprised of two or more adjacent period nodes.

Certainly, in order to avoid interference from external factors, temperature collection uses a manner of sampling for multiple times to determine the running of the temperature controller. If the number of rises of the sampled temperature at the time of switch-on is greater than the number of drops of the sampled temperature, it is considered to be the hot wind, and the jitter data caused by external factors is discarded (a similar strategy is used for determining the cold wind).

For example, in N determining periods, if the number of decreasing trends of the change trend of the ambient temperature is determined to be larger, the change trend of the ambient temperature is finally determined to be a decreasing trend; and if the number of increasing trends of the change trend of the ambient temperature is determined to be larger, the change trend of the ambient temperature is finally determined to be an increasing trend; where N is an odd number.

In other embodiments, after the step of configuring the running state of the temperature control apparatus according to the change trend of the ambient temperature, the following steps are included.

In the flat trend, the working speed of the fan of the fan coil is configured to be a low speed; where the working speed includes a low speed (i.e., a first preset rate), a medium speed (i.e., a second preset rate), and a high speed (i.e., a third preset rate).

In the decreasing trend or the increasing trend, a working speed of a fan of the fan coil is configured according to a difference, where in the decreasing trend, the difference is a difference between currently acquired ambient temperature and the target cooling temperature, and in the increasing trend, the difference is a difference between the target heating temperature and the currently acquired ambient temperature. A temperature threshold T2 is less than a temperature threshold T1.

In other embodiments, the step of configuring a working speed of a fan of the fan coil according to a difference includes the following steps.

If the difference is greater than the preset temperature threshold T1 (i.e., a first temperature threshold), the working speed of the fan is configured to be the high speed.

If the difference is less than the preset temperature threshold T2 (i.e., a second temperature threshold) and is not less than 0, the working speed of the fan is configured to be the low speed.

If the difference is not less than the temperature threshold T2 and not greater than the temperature threshold T1, the working speed of the fan is configured to be the medium speed, where T2 is greater than 0.

The method may further include: when the difference is equal to 0, a solenoid valve of the fan coil is configured to be in a closed state; when the difference is less than a preset temperature threshold T3 (i.e., a third temperature threshold), the fan is configured to be in a closed state, where the temperature threshold T3 is less than 0.

After the step in which when the difference is less than the preset temperature threshold T3, the fan is configured to be in the closed state, the method further includes: in preset time, when the difference is greater than the preset temperature threshold T4 (i.e., a fourth temperature threshold), the solenoid valve and the fan are configured to be in a switch-on state, where the temperature threshold T4 is greater than 0.

In other embodiments, the processor executes the temperature control computer program and further implements the following steps.

Running data of the temperature control apparatus is determined, and the running data is sent to a preset server, so that the server generates an analysis chart.

State data of the temperature control apparatus is sent to a control terminal that obtains control authority from the server.

In other embodiments, the temperature control apparatus further includes a network connection module, which is configured to form a network with the control terminal and/or the server in a wireless or wired manner and interact with the intelligent terminal and/or the server about a control instruction and/or state data.

In other embodiments, the step of receiving a configuration instruction via a network and configuring a running state of the temperature control apparatus according to the configuration instruction includes the following steps.

The configuration instruction is received via a network, and a temperature control apparatus identifier is parsed from the configuration instruction, where the configuration instruction is any one of: a control instruction directly sent by the control terminal to the temperature control apparatus or the control instruction of the control terminal forwarded by the server to the temperature control apparatus.

When the parsed temperature control apparatus identifier is consistent with its own temperature control apparatus identifier, the running state of the temperature control apparatus is configured according to the configuration instruction.

In other embodiments, the temperature control apparatus identifier is a network address of the temperature control apparatus.

Before the step of receiving the configuration instruction via a network and parsing a temperature control apparatus identifier from the configuration instruction, the method further includes the following steps.

Heartbeat data is reported to the server, so that when the control instruction of the control terminal is received, the server forwards the received control instruction of the control terminal to a corresponding temperature control apparatus according to a preset mapping table of hardware addresses and network addresses, where the heartbeat data carries a hardware address of the temperature control apparatus.

It is to be noted that the functional modules that are also involved in FIG. 1 but are not described in the embodiment of the present invention are described in an embodiment 2.

### Embodiment 2

As shown in FIG. 2, an embodiment of the present invention provides a temperature controller system of a central air conditioner, and the system includes any temperature control apparatus described in the embodiment 1, a control terminal, and a server.

The control terminal is configured to display and control the state of the temperature controller, for example, the control terminal is configured to obtain from the server a device list of temperature control apparatuses under control of the control terminal.

The device list is displayed on a control interface.

On the control interface, a temperature control apparatus selected by a user is received.

A configuration instruction is sent to the selected temperature control apparatus.

A control APP has been installed in the control terminal.

The server is configured to manage authority of the temperature controller, display data statistics of the temperature control apparatus and forward a configuration instruction, and have communication data between the control APP and management software, where the management software is configured in the server.

The temperature control apparatus is configured to control running of the fan coil and wirelessly communicate with the server module and the control terminal and automatically configure the mode, temperature, wind speed gear and switch of the temperature controller according to the ambient information.

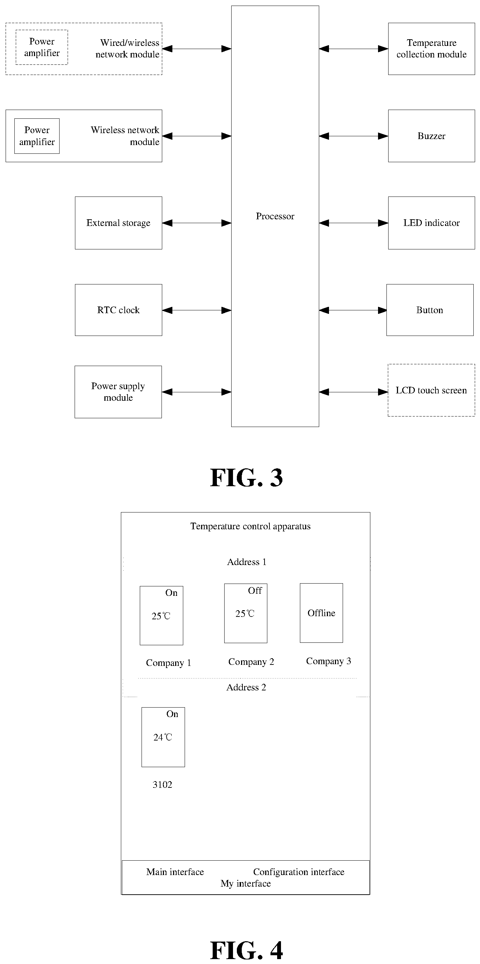

In other embodiments, the temperature control apparatus may be any one of a temperature controller terminal or a temperature controller gateway. With reference to FIG. 3, the temperature controller gateway is configured to control running of the fan coil and communicate with the server module and the temperature controller terminal module, and periodically report the heartbeat to the server module; the temperature controller gateway hardware mainly includes a network connection module, a processor, a real-time clock (RTC) clock, a temperature collection module (such as a temperature sensor), a light emitting diode (LED) indicator, a buzzer, a button, an external storage, a power supply module, and an liquid crystal display (LCD) touch screen.

The network connection module is connected to the Internet and is responsible for communicating with the server on the Internet. The network connection module includes at least one wireless network module, and the network connection module may further include a wireless network module or a wired network module, where the wireless network module is preferably a WiFi network processor.

The network connection module is responsible for receiving the configuration instruction of the temperature controller forwarded by the network processor and forwarding the configuration instruction to the temperature controller gateway. The wired network module and the wireless network module transfer data to each other through the processor, and convert the data through a customized protocol. If the wireless network module has the function of connecting to the Internet, the network processor for connecting to the Internet may be removed from the gateway device hardware. The wireless network module may be configured with a power amplifier configured to amplify the wireless signal of the wireless network module, so that the wireless signal is transmitted farther; certainly, the power amplifier may also be configured in the wired network module.

A processor is configured to control the signal lines of the fan coil and to connect the various hardware modules.

The RTC clock module is configured to perform timing and obtain server time in real time for time check.

The temperature collection module is configured to collect ambient temperature.

The LED indicator is configured to indicate the running state of the temperature controller and the network state.

The buzzer is configured for device identification during networking.

The external storage is configured to store the fan coil control program, the running version files of each chip and some key data of the temperature controller during running.

The button is mainly configured to have functions of configuring a state of the temperature controller, resetting the device, and restoring the factory configurations.

The power supply module is configured to power the device.

The LCD touch screen is an optional module, and is configured to display the state of the temperature controller and configure the temperature controller. If the user requires the usage habits of the conventional temperature controller panel to be compatible, the LCD touch screen is configured; if the user is more accustomed to using the control terminal for remote operation, the LCD touch screen is not configured.

The temperature controller gateway itself is also a temperature controller. Compared with the temperature controller terminal, one more network processor exists, and the performance configurations of the wireless network module and the performance configurations of other hardware are stronger than those of the terminal device. According to the needs of the user, the gateway may be independent, and the function of the temperature controller is not integrated. Each temperature controller system requires at least one gateway device or multiple gateway devices may be deployed.

As shown in FIG. 3, the hardware of the temperature controller terminal device mainly includes a wireless network module, a processor, an RTC clock, a temperature collection module, an LED indicator, a buzzer, an external storage, a button, a power supply module, an LCD touch screen, and may also include a timing switch module, a lock and unlock module, a statistics module, and a reporting module. If the wireless network module has a Mesh (wireless grid network) network function, the wireless network module is configured to communicate with the wireless network module of the gateway device or the wireless network module of the next hop. Other components have the same function as a gateway component. Each temperature controller system has zero, one or multiple terminal devices. The temperature controller is installed in the range of about 1 meter from the fan coil outlet to save wiring.
1. The temperature controller terminal may be configured with a software module. The software module is mainly responsible for intelligent automatic running of the temperature controller, control over the fan coil, reporting of the daily running state statistics of the temperature controller, timing of the temperature controller, processing of the timer configured by the user and other functions. The temperature controller terminal automatically records the running time of each gear and mode every day, and reports the statistical data (i.e., running data) to the server after 0 a.m. the next day.

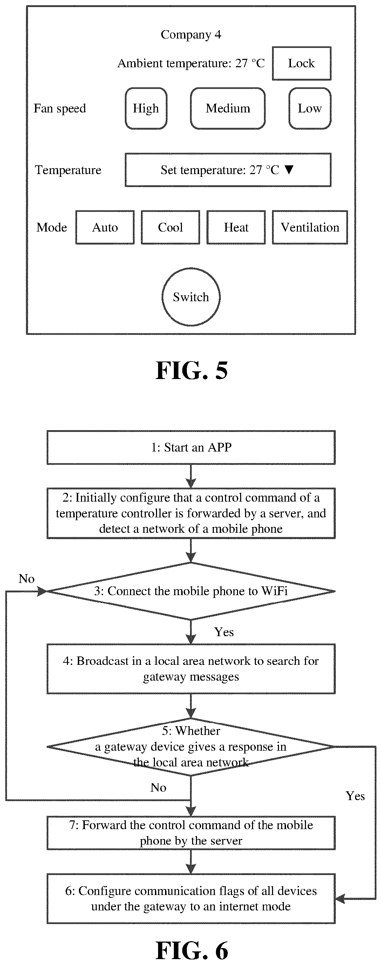

The timing switch function is configured by the user in the APP of the control terminal (such as a mobile phone). The software module of the temperature controller terminal stores the configurations, and after the time point configured by the user is reached, the switch-on and switch-off configurations are automatically performed on the temperature controller. An example of the main interface and an example of the configuration interface of the APP are shown in FIG. 4 and FIG. 5 respectively.

The wireless network module is mainly responsible for wireless communication and data forwarding. The wireless network module includes network processor software and a network processor, and is mainly responsible for performing protocol conversion between the wireless network module and the network processor, reporting the heartbeat to the server, collecting the online state of each temperature controller terminal and ambient temperature, and other functions.

For automatically running of the temperature controller terminal, the following technical solution is used: after the temperature controller terminal is energized, the temperature collection module starts to periodically collect the ambient temperature data. The temperature controller terminal automatically configures the running state, temperature, and gear of the temperature controller by determining the change of the ambient temperature.

In order to avoid interference from external factors, temperature collection uses a manner of sampling for multiple times to determine the running of the temperature controller terminal. If the number of rises of the sampled temperature at the time of switch-on is greater than the number of drops of the sampled temperature, it is considered to be the hot wind, and the jitter data caused by external factors is discarded (a similar strategy is used for determining the cold wind). When the fan coil emits the cold wind, the temperature controller terminal is automatically configured to be a default cooling temperature. If the ambient temperature is lower than the default cooling temperature, the solenoid valve is closed and fan of the fan coil is turned off. If the ambient temperature is higher than the default cooling temperature, the gear of the fan is configured according to the magnitude of difference between the ambient temperature and the configured temperature. When the hot wind is emitted, the temperature of the temperature controller is automatically configured to be a default heating temperature. If the ambient temperature is higher than the default heating temperature, the solenoid valve is closed and the fan of the fan coil is turned off. If the ambient temperature is lower than the default heating temperature, the gear of the fan is configured according to the magnitude of difference between the ambient temperature and the configured temperature.

The default cooling temperature of the system is 26°C, and the default heating temperature of the system is 20°C, and these values are also the government's recommended value for temperature configuration in the office area. The default configuration temperature may effectively reduce energy consumption of the central air conditioner, and in special cases, the user may configure other temperature values. After the user configures other temperature, the temperature for closing the solenoid valve of the fan coil and turning off the fan is automatically adjusted accordingly.

If the user configures the mode and the wind speed of the temperature controller terminal after turning on the temperature controller terminal, the temperature controller terminal runs according to the configurations of the user, and the automatic mode does not take effect. The automatic mode takes effect again after the user selects the automatic mode.

In other embodiments, the software module of the temperature controller terminal includes the following program modules.

An anti-shake module is configured to screen the effective change information of the collected temperature.

A first determining module is configured to determine the change trend, e.g., higher or unchanged, of the ambient temperature after the temperature controller is turned on.

A temperature mode automatic configuration module is configured to configure the running mode to heating when the first determining module indicates an increasing trend and configure the default heating temperature; configure the running mode to be cooling when the first determining module indicates a decreasing trend and configure the default cooling temperature (i.e., the target temperature); and configure the running mode to be ventilation when the first determining module indicates that the temperature is unchanged.

A second determining module is configured to determine the difference between the ambient temperature and the default temperature under the decreasing trend; and determine the difference between the default temperature and the ambient temperature under the increasing trend.

A fan gear automatic configuration module is configured to configure the fan gear to be a low speed when the first determining result indicates that the temperature is unchanged.

The fan gear automatic configuration module is further configured to configure the working speed of the fan to be the third preset rate if the difference is greater than the preset temperature threshold T1.If the difference is less than the preset temperature threshold T2 and not less than 0, the working speed of the fan is configured to be the first preset rate.

If the difference is not less than the temperature threshold T2 and not greater than the temperature threshold T1, the working speed of the fan is configured to be the second preset rate; where the first preset rate is lower than the second preset rate, and the second preset rate is lower than the third preset rate; and the temperature threshold T2 is less than the temperature threshold T1.

A switch-on and switch-off automatic configuration module is configured to configure the solenoid valve of the fan coil to be in a closed state when the difference is equal to 0. When the difference is less than a preset temperature threshold T3, the fan is configured to be in a turn-off state; where the temperature threshold T3 is less than 0.

For example, when the temperature mode automatic configuration module configures the mode to be cooling and the temperature difference determined by the second determining module is 0, the solenoid valve of the fan coil is configured to be closed, when the temperature difference of the second determining module is lower than the configuration temperature T3, the fan of the fan coil is configured to be turned off, and after a period of turn-off, when the temperature difference determined by the second determining module is higher than the configuration temperature T4, the fan is automatically turned on and the solenoid valve automatically opens; when the temperature mode automatic configuration module configures the mode to be heating and the temperature difference of the second determining module is 0, the solenoid valve of the fan coil is configured to be closed, when the temperature difference of the second determining module is lower than the configuration temperature T3, the fan of the fan coil is configured to be turned off, and after a period of turn-off, when the temperature difference of the second determining module is higher than the configuration temperature T4, the fan is automatically turned on and the solenoid valve automatically opens.

The processor is configured to control the temperature controller and connect the hardware components of the temperature controller; and is configured to respond to the configuration instructions of various temperature, modes, gears and switches of the control terminal APP and control the running of the fan coil.

The timing switch module is configured to automatically switch on or switch off after the timing switch-on/-off time configured by the user is up.

The lock and unlock module is configured to, after the administrator locks the temperature controller, not allow other users to perform remote configuration on the temperature controller, and also not allow configuration of buttons on the LCD panel.

The statistics module is configured to automatically count the daily running time of the temperature controller in various modes and gears, and obtain the running data of the temperature controller.

The reporting module is configured to report the running data of the temperature controller terminal to the server.

2. The server is mainly responsible for communication with the temperature controller terminal device, the temperature controller gateway device and the control terminal; the server is also responsible for the user's login authority management, user authorization management and user operation log statistics. The server is generally deployed on a cloud server or deployed on a server built by itself.

The server includes a statistical data storage module, an operation log storage module, an authority management module, a statistical data charting module and an operation log query module.

The statistical data storage module is configured to store statistical data of the temperature control apparatus in a database.

The operation log storage module is configured to store the user's remote operation record in an operation log.

The authority management module is configured to send information of the authorized devices to the control terminal when the control terminal requests a device list.

The statistical data charting module is configured to plot data in the database into a chart on the management software.

The operation log query module is configured for an administrator to query the above operation log.3. The control terminal displays the state of the temperature control apparatus, controls the temperature control apparatus, responds to various operations of the user, configures the installation address and name of the temperature control apparatus, and configures the timing switch time of the temperature control apparatus through the APP. When the network processor of the temperature controller gateway device is a WiFi network processor, the control terminal is also responsible for configuring the connection between the WiFi module of the gateway and the wireless router. The control terminal may also intelligently select whether to communicate with the gateway in the local area network directly or through the server according to the network condition. The APP mainly includes the Android platform and the IOS platform, and the platform may also be extended to other smartphone platforms.

In other embodiments, the control terminal may include a temperature controller monitoring module, a timer configuration module, an authorization module, a configuration module, a batch configuration module and an automatic determining internal or external network module.

The temperature controller monitoring module is configured to view and configure the state of the temperature control apparatus for the user.

The timer configuration module is configured to configure timing switch-on/-off for the temperature control apparatus by the user.

The authorization module is configured for an administrator to give other users the authorization of certain specified temperature control apparatuses.

The configuration module is configured for the administrator to configure the address and name of a newly installed temperature control apparatus.

The batch configuration module is configured for the administrator to configure multiple temperature control apparatuses at one time.

The automatic determining internal or external network module has following functions. When the temperature control apparatus and the control terminal are in the same local area network, the control of the temperature control apparatus automatically takes the local area network control, and transfer through the server is not needed; when the temperature control apparatus and the control terminal are not in the same local area network, transfer through the server is needed; and the internal network or the external network is automatically determined by the APP and does not need to be configured by the user. The mobile phone as the control terminal is taken as an example, and the process is shown in FIG. 6.

In step 1, an app is started.

In step 2, it is initially configured that the control command of the temperature controller is forwarded by a server, and a network of the mobile phone is detected.

In step 3, whether the mobile phone is connected to WiFi is determined. If the mobile phone is connected to WiFi, step 4 is executed, and if the mobile phone is not connected to WiFi, step 7 is executed.

In step 4, gateway messages are searched for by broadcasting in a local area network.

In step 5, whether a gateway device gives a response in the local area network is determined. If a gateway device gives a response, step 6 is executed, if no gateway device gives a response, step 7 is executed.

In step 6, communication flags of all devices under the gateway are configured to be in an internal network mode.

In step 7, control commands of the mobile phone are forwarded by the server.

4. The system may also include a management software module which includes a web server and a client module. The management software module is configured to manage deletion, modification, authorization and the like of the temperature controller, make switch-on time statistics of the temperature controller and perform charting, make operation log statistics of the temperature controller, and the like. The management software module mainly communicates with the server. The management software module may also use management software having C/S architecture.

The system in the embodiment of the present invention has the following technical effects.
1. According to the embodiments of the present invention, a method for controlling a fan coil by using a smart phone is introduced, which is convenient for remote management by a user, and can be used by any smart phone by installing an APP.
2. According to the embodiments of the present invention, a big data analysis is made based on the temperature data collected by the temperature control apparatus, and a set of automatic operation system of the temperature control apparatus is designed. In most cases, the user only needs to configure the switch of the temperature control apparatus, and does not need to configure the mode, the wind speed, the temperature and other information of the temperature control apparatus. After the user configures the timing switch time of the temperature control apparatus, the user may no longer control the running of the temperature control apparatus, and the temperature control apparatus runs intelligently and automatically.
3. Due to remote management, the temperature control apparatus may be installed near (about 1 meter) the outlet of the fan coil, so the wiring is reduced and the networking cost of the user is saved.
4. The temperature control apparatus automatically counts and reports the total switch-on and the running time of each gear and mode each day to the server. After the server stores the data, the data is provided to the control terminal and the management software, and statistical charts of daily, weekly, and monthly running conditions of the temperature control apparatus are drawn on the control terminal and the management software. It is convenient for users to analyze the running state and energy consumption state of the temperature controller.
5. The functions of timing switch of the temperature apparatus, batch management of the temperature control apparatus and locking of the temperature control apparatus are provided for the administrator users. The management is more convenient and the energy saving effect is more significant.
6. The administrator user can operate on the control terminal or the management software to give authorization to other users. After the other users are authorized, the other users can use the control terminal to control the authorized temperature control apparatus and view the running state of the temperature control apparatus.
7. If the control terminal and the gateway of the temperature control apparatus are in the same WiFi, the control terminal can control the temperature control apparatus directly through a local area network without connecting to the Internet to save the user traffic and ensure the real-time performance of controlling the temperature control apparatus. Even if the connection of the WiFi router and the Internet is disconnected, monitoring of the temperature control apparatus by the user is not affected. If the control terminal and the gateway are not in the same WiFi, the control terminal needs to be connected to the Internet, the LAN control or the Internet control is automatically determined by the control terminal, and no user intervention is required.
8. The power amplifier module is added to the hardware of the temperature control apparatus to make the wireless data transmission distance between the temperature controllers longer.

### Embodiment 3

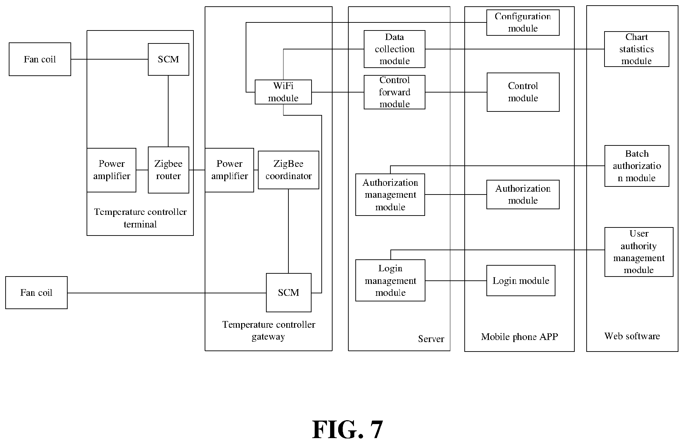

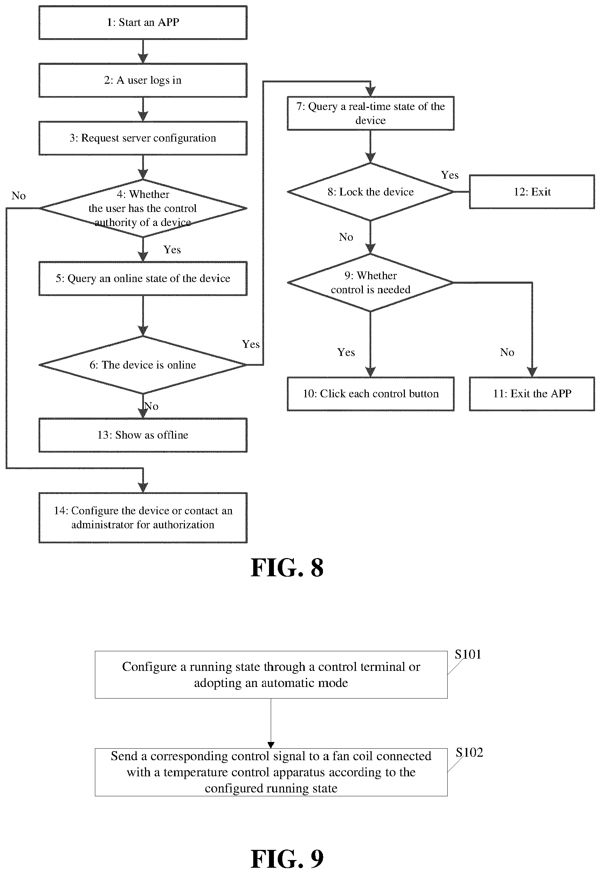

As shown in FIG. 7, according to the embodiment, the operation of a single temperature control apparatus is achieved on a mobile phone. The network processor in the gateway hardware of the temperature controller utilizes the WiFi module of the ESP8266 chip, and the wireless network module utilizes the CC2538 module as the ZigBee coordinator. The wireless network module in the hardware of the temperature controller terminal utilizes the CC2530 module as the Zigbee router. The processor utilizes Xintang 0516 single chip microcomputer. As shown in FIG. 8, the operation flow includes the following steps.

In step 1, an app is started.

In step 2, an APP user logs in; the APP user may login to the APP with the mobile phone number of the APP user itself, and obtain an short-message verification code as a login password. The server verifies whether the verification code is correct, and after the verification is passed, the user logs in successfully.

In step 3, server configuration is requested.

In step 4, the server determines whether the control authority of the temperature controller exists. After the user logs in successfully, the server finds out in the server which temperature controller devices the user has control authority according to the user's mobile phone number, and returns the list of authorized devices to the APP. The APP displays the list of devices on the APP interface. If the user does not have an authorized device, step 14 is executed.

In step 5, the APP obtains the device list and queries the online state of the device, as shown in FIG. 4.

In step 6, whether the device is online is determined. If the device is online, the user may enter the APP configuration interface and add a new device in the configuration interface. If a new temperature controller device currently exists, after the button of add new device is clicked, the new temperature controller will be displayed in the interface to be configured. After the button of enter is clicked, the new temperature controller may be named and configured, and after configuration is completed, step 7 is executed. If the device is not online, step 13 is executed.

In step 7, the real-time state of the device is queried. The state of the temperature controller mainly includes the state of a fan speed (high speed, medium speed, and low speed), current ambient temperature, configuration temperature of the temperature control apparatus, the mode state (automatic, cooling, heating, ventilation) of the temperature control apparatus, the switch state and the lock state.

In step 8, whether the device is locked is determined. If the device is locked, step 12 is executed; if the device is not locked, step 9 is executed.

In step 9, whether the device needs to be controlled is determined. If the device needs to be controlled, step 11 is executed; if the device does not need to be controlled, step 10 is executed.

In step 10, each control button as shown in FIG. 5 is clicked.

In other embodiments, the control of the temperature controller mainly includes fan speed configuration (high speed, medium speed, and low speed), temperature setting, mode configuration (automatic, cooling, heating, ventilation) of the temperature controller, switch configuration, timing switch configuration, and lock device configuration.

In the APP, the IEEE address of the device to be controlled is filled in the communication interface. After receiving the control command, the Zigbee coordinator module of the gateway device determines whether the IEEE address is its own address. If the IEEE address is its own address, the Zigbee coordinator module of the gateway device directly sends a command to the MCU to control the fan coil of the air conditioner. If the IEEE address is not its own address, the Zigbee coordinator of the gateway device originally encapsulates the control command of the APP, queries the routing table, and sends the control command to the next-hop zigbee router.

The Zigbee router determines whether the destination IEEE address of the received control command is its own IEEE address. If the destination IEEE address of the received control command is its own IEEE address, the Zigbee router sends a command to the microcontroller unit (MCU) to control the fan coil of the air conditioner. If the destination IEEE address of the received control command is not its own IEEE address, the Zigbee router continues to send the control command to a next hop until the control command is sent to the corresponding Zigbee router.

When the mobile phone sends the control command (i.e., the configuration instruction) to the temperature controller, the mobile phone checks the network connection manner of the control APP.

If the mobile phone connection is in the mobile network manner, the control command is forwarded through the server. If the mobile phone connection is in the WiFi manner, the control APP scans the gateway devices in the local area network. If a gateway device gives a response in the local area network, the gateway is marked as an internet device, the communication between the control APP and the gateway device adopts the manner of direct communication in the local area network, and transfer through the server is not needed. The gateway device that does not give a response is marked as the external network device, and communicates with the device via transfer through the server.

In step 11, exiting is executed.

In step 12, if the temperature control apparatus is in a locked state, no other operation can be executed on the temperature control apparatus, and the administrator is contacted to release the locked state of the temperature control apparatus or exiting is executed.

In step 13, a not online state is displayed.

In step 14, the device is configured or the administrator is contacted for authorization. For example, if a new temperature controller device does not exist currently, the administrator is contacted to authorize the temperature controller usage authority for a user. The administrator authorizes the user through a control APP software or a web software.

### Embodiment 4

According to the embodiment, the control of multiple temperature controller devices (which may be all devices) on the smart phone at the same time is implemented. The embodiment is mainly used for the administrator to batch control the temperature controllers. The following steps are included.

In step A, an APP user logs in.

The APP user logs in to the APP with its own mobile phone number, and obtain a short-message verification code as a login password. The server verifies whether the verification code is correct, and after the verification is passed, the user logs in successfully.

In step B, the APP obtains a list of devices.

After the user logs in successfully, the APP finds out in the server which temperature controller devices the user has control authority according to the user's mobile phone number, the list of authorized devices is returned to the APP, and the APP displays the list of devices on the app interface.

In step C, the user enters a batch configuration interface of the control APP.

In step D, a batch control of the temperature controllers is executed.

The batch control of the temperature controllers mainly includes fan speed configuration (high speed, medium speed, and low speed), temperature setting, mode configuration (automatic, cooling, heating, ventilation) of the temperature controller, switch configuration, timing switch configuration, and lock device configuration.

After the user enters the batch configuration interface, the user selects multiple devices that need to be configured in batch. After the batch configuration button is clicked, the APP sends control commands one by one to the devices according to the solution in the embodiment 3.

### Embodiment 5

According to the embodiment, automatic running of the temperature controller device is implemented. The following steps are included.

In step A, the device is energized.

The power supply of the device is normal, and the hardware, software, and temperature sensors run normally.

In step B, the device collects the ambient temperature.

The temperature sensor of the device collects the ambient temperature every 5 seconds and records the collected temperature.

In step C, the device is turned on.

The user remotely operates the device with the mobile phone to be turned on and configures the device to be in an automatic mode (or the user remotely operates the device with the mobile phone to be turned on and the device enters the automatic mode by default if no operation is performed within a predetermined time) or the device is turned on automatically by the timer of the device.

In step D, the device determines the change trend of the ambient temperature.

If the ambient temperature is slowly decreasing, it is considered that the fan coil outlet gives out cold air, and the process proceeds to step E. If the ambient temperature is slowly increasing, it is considered that the fan coil outlet gives out hot air, and the process proceeds to step F. If the ambient temperature is unchanged, it is considered that the fan coil outlet gives out natural air, and the central air conditioner has no cooling or heating. The fan gear of the temperature controller is configured to low.

In step E, the target temperature is automatically configured to 26 °C, and the mode is configured to a cooling state.

For example, in an increasing trend, if the ambient temperature is greater than 30 °C, the fan gear of the air conditioner is configured to a high-gear; if the ambient temperature is greater than 27 °C and less than 30 °C, the fan gear of the air conditioner is configured to a mid-gear; if the ambient temperature is greater than 26 °C and less than 27 °C, the fan gear of the air conditioner is configured to a low-gear; if the ambient temperature is less than 26 °C, the solenoid valve is closed; if the temperature continues to decrease after the solenoid valve is closed, the fan is turned off. After switch-off for some time, if the ambient temperature is greater than 26.5 °C, the solenoid valve is opened and the fan is turned on again.

In step F, the target temperature is automatically configured to 20 °C, and the mode is configured to a heating state.

If the ambient temperature is less than 16° C, the fan gear of the air conditioner is configured to a high-gear; if the ambient temperature is greater than 16 °C and less than 19 °C, the fan gear of the air conditioner is configured to a mid-gear; if the ambient temperature is greater than 19°C and less than 20°C, the fan gear of the air conditioner is configured to a low-gear; if the ambient temperature is greater than 20 °C, the solenoid valve is closed; if the temperature continues to increase after the solenoid valve is closed, the fan is turned off. After switch-off for some time, if the ambient temperature is less than 19.5 °C, the solenoid valve is opened and the fan is turned on again.

### Embodiment 6

According to the embodiment, the control of a single temperature control apparatus on a smart phone is implemented. The wireless communication technology of the temperature control apparatus adopts narrow band-internet of things (NB-IoT), the subscriber identity module (SIM) card with the NB-IoT chip is installed on the temperature control apparatus, and the temperature control apparatus periodically reports a heartbeat to the server, where the heartbeat includes a hardware address of the SIM card. The following steps are included.

In step A, an APP user logs in.

The APP user logs in to an APP with its own mobile phone number, and obtains a short-message verification code as a login password. The server verifies whether the verification code is correct, and after the verification is passed, the user logs in successfully.

In step B, the APP obtains a list of devices.

After the user logs in successfully, the APP finds out in the server which temperature control apparatuses the user has control authority according to the user's mobile phone number, the list of authorized devices is returned to the app, and the APP displays the list of devices on the app interface.

In step C, the state of the temperature control apparatus is queried.

The state of the temperature control apparatus mainly includes the state of the fan speed (high speed, medium speed, and low speed), current ambient temperature, configuration temperature of the temperature control apparatus, the mode state (automatic, cooling, heating, ventilation) of the temperature control apparatus , the switch state and the lock state.

In step D, a control of the temperature control apparatus is executed.

The control of the temperature control apparatus mainly includes fan speed configuration (high speed, medium speed, and low speed), temperature setting, mode configuration (automatic, cooling, heating, ventilation) of the temperature control apparatus, switch configuration, timing switch configuration and lock device configuration.

In the APP, the NB-IoT hardware address of the controlled temperature control apparatus is filled in the communication interface and a control command is sent to the server. The server forwards the control command to the corresponding temperature control apparatus by checking the mapping table of the hardware address and the network address.

### Embodiment 7

According to the embodiment, the control of a single temperature control apparatus on a smart phone is implemented. The wireless communication technology of the temperature controller adopts LoRa, a LoRa network processor is installed on the temperature controller, and the LoRa network processor periodically reports a heartbeat to the server, where the heartbeat includes a hardware address of the LoRa. The data processing method includes the following steps, and the hardware address belongs to one of the temperature control apparatus identifiers.

In step A, an APP user logs in.

The APP user logs in to an APP with its own mobile phone number, and obtains a short-message verification code as a login password. The server verifies whether the verification code is correct, and after the verification is passed, the user logs in successfully.

In step B, the APP obtains a list of devices.

After the user logs in successfully, the APP finds out in the server which temperature control apparatuses the user has control authority according to the user's mobile phone number, the list of authorized apparatuses is returned to the APP, and the APP displays the list of devices on the app interface.

In step C, the state of the temperature control apparatus is queried.

The state of the temperature control apparatus mainly includes the state of the fan speed (high speed, medium speed, and low speed), current ambient temperature, configuration temperature of the temperature controller, the mode state (automatic, cooling, heating, ventilation) of the temperature controller, the switch state, and the lock state.

In step D, a control of the temperature control apparatus is executed.

The control of the temperature control apparatus mainly includes fan speed configuration (high speed, medium speed, and low speed), temperature setting, mode configuration (automatic, cooling, heating, ventilation) of the temperature controller, switch configuration, timing switch configuration and lock device configuration.

In the APP, the LoRa hardware address of the device to be controlled is filled in the communication interface, and a control command is sent to the server. The server forwards the control command to the corresponding temperature controller by checking the mapping table of the hardware address and the network address.

### Embodiment 8

As shown in FIG. 9, a method for controlling a fan coil is provided in an embodiment of the present invention and applied to a temperature control apparatus of an air conditioner, and the method includes the following steps.

In step S101, a running state is configured through a control terminal or is in an automatic mode.

The step includes: if the temperature control apparatus is in a non-automatic working mode, a configuration instruction is received via a network, and the running state of the temperature control apparatus is configured according to the configuration instruction.

If the temperature control apparatus is in an automatic working mode, ambient temperature is collected according to a set period; a change trend of the ambient temperature is determined according to the collected ambient temperature; and the running state of the temperature control apparatus is configured according to the change trend of the ambient temperature.

In step S 102, a corresponding control signal is sent to a fan coil connected with the temperature control apparatus according to the configured running state so as to enable the fan coil to start an action corresponding to the running state.

According to the embodiment of the present invention, the running state of the temperature control apparatus is configured through the control terminal, or the running state of the temperature control apparatus is automatically configured according to the change trend of the ambient temperature, so the problem that the existing temperature controller needs manual configuration is effectively solved and the control convenience of the existing temperature controller is improved.

In other embodiments, the step of determining a change trend of the ambient temperature according to the collected ambient temperature includes the following steps.

Collected ambient temperature is obtained at each period node.

The change trend of the ambient temperature is determined according to the ambient temperature of the each period node.

In other embodiments, the running state includes a cooling state, a heating state, and a ventilation state.

The step of configuring the running state of the temperature control apparatus according to the change trend of the ambient temperature includes the following steps.

If the change trend of the ambient temperature is a decreasing trend, the running state of the temperature control apparatus is configured to the cooling state, and a target cooling temperature is configured.

If the change trend of the ambient temperature is an increasing trend, the running state of the temperature control apparatus is configured to the heating state, and a target heating temperature is configured.

If the change trend of the ambient temperature is a flat trend, the running state of the temperature control apparatus is configured to the ventilation state.

In other embodiments, the determining manner of the change trend of the ambient temperature includes the following manners.

During the preset number of periods, if decreasing amplitude of the ambient temperature reaches a preset cooling threshold, the change trend of the ambient temperature is the decreasing trend.

During the preset number of periods, if the increasing amplitude of the ambient temperature reaches a preset heating threshold, the change trend of the ambient temperature is the increasing trend.

During the preset number of periods, if the change amplitude of the ambient temperature is within a preset ventilation threshold range, the change trend of the ambient temperature is the flat trend.

In other embodiments, after the step of configuring the running state of the temperature control apparatus according to the change trend of the ambient temperature, the following steps are included.

In the flat trend, the working speed of the fan of the fan coil is configured to a low speed; where the working speed includes a low speed, a medium speed, and a high speed.

A working speed of a fan of the fan coil is configured according to a difference in the decreasing trend or the increasing trend, where in the decreasing trend, the difference is a difference between currently acquired ambient temperature and the target cooling temperature, and in the increasing trend, the difference is a difference between the target heating temperature and the currently acquired ambient temperature.

The step of configuring a working speed of a fan of the fan coil according to a difference includes the following steps.

If the difference is greater than a preset temperature threshold T1, the working speed of the fan is configured to the high speed.

If the difference is less than the preset temperature threshold T2 and not less than 0, the working speed of the fan is configured to the low speed.

If the difference is not less than the temperature threshold T2 and not greater than the temperature threshold T1, the working speed of the fan is configured to the medium speed.

Certainly, the step of configuring a working speed of a fan of the fan coil according to a difference further includes the following steps.

When the difference is equal to 0, a solenoid valve of the fan coil is configured to be in a closed state.

When the difference is less than a preset temperature threshold T3, the fan is configured to be in a closed state; where the temperature threshold T3 is less than 0.

After the step in which when the difference is less than the preset temperature threshold T3, the fan is configured to be in the closed state, the following steps are included.

Within preset time, when the difference is greater than a preset temperature threshold T4, the solenoid valve and the fun are configured to be in a switch-on state, where the temperature threshold T4 is greater than 0.

In other embodiments, the method further includes the following steps.

Running data of the temperature control apparatus is determined, and the running data is sent to a preset server, so that the server generates an analysis chart.

State data of the temperature control apparatus is sent to a control terminal that obtains control authority from the server.

In other embodiments, the step of receiving a configuration instruction via a network and configuring a running state of the temperature control apparatus according to the configuration instruction includes the following steps.

The configuration instruction is received via the network, and a temperature control apparatus identifier is parsed from the configuration instruction, where the configuration instruction is any one of: a control instruction directly sent by the control terminal to the temperature control apparatus or the control instruction of the control terminal forwarded by the server to the temperature control apparatus.

When the parsed temperature control apparatus identifier is consistent with its own temperature control apparatus identifier, the running state of the temperature control apparatus is configured according to the configuration instruction.

In other embodiments, the temperature control apparatus identifier is a network address of the temperature control apparatus.

Before the step of receiving the configuration instruction via a network and parsing a temperature control apparatus identifier from the configuration instruction, the method further includes the following steps.

Heartbeat data is reported to the server, so that when the control instruction of the control terminal is received, the server forwards the received control instruction of the control terminal to a corresponding temperature control apparatus according to a preset mapping table of hardware addresses and network addresses, where the heartbeat data carries a hardware address of the temperature control apparatus.

### Embodiment 9

According to an embodiment of the present invention, a computer-readable storage medium is provided and stores a fan coil control program which, when executed by at least one processor, implements the steps of any method in the embodiment 8.

According to the embodiment of the present invention, for the implementation by the storage medium, reference may be made to the above method embodiments, and no further description is provided herein.

The computer readable storage medium in embodiments of the present invention may be a random access memory (RAM) memory, a flash memory, a read-only memory (ROM), an Erasable Programmable Read-Only Memory (EPROM) memory, an Electrically Erasable Programmable Read-only Memory (EEPROM) memory, a register, a hard disk, a removable hard drive, a compact disc read-only memory (CD-ROM), or any other form of storage medium known in the art. A storage medium may be coupled to the processor, so that the processor can read information from the storage medium and write information to the storage medium, or the storage medium may be a component of the processor. The processor and the storage medium may be located in an application specific integrated circuit.

It should be understood that "one embodiment" or "an embodiment" mentioned throughout the description refers to that a particular feature, structure or characteristic related to the embodiments is included in at least one embodiment of the present invention. Therefore, the phrase "in one embodiment" or "in an embodiment" in various places throughout the description does not necessarily refer to the same embodiment. In addition, these particular features, structures or characteristics may be combined in one or more embodiments in any suitable manner. It should be understood that in various embodiments of the present invention, the serial numbers of the above processes do not mean the execution order and the execution order of the above processes should be determined according to their functions and internal logics, which should not limit the implementation processes of the present invention in any improper way. The above serial numbers of the embodiments of the present invention are merely for ease of description and do not indicate superiority and inferiority of the embodiments.

It is to be noted that as used herein, the term "comprising", "including" or any other variant thereof is intended to encompass a non-exclusive inclusion so that a process, method, article or apparatus that includes a series of elements not only includes those elements but also includes other elements that are not expressly listed or are inherent to such a process, method, article or apparatus. In the absence of more restrictions, the elements defined by the statement "including a ..." do not exclude the presence of additional identical elements in the process, method, article or apparatus that includes the elements.

It should be understood that the devices and the methods disclosed in the embodiments of the present application may be implemented in other ways. The device embodiments described above are merely illustrative. For example, the unit division is merely a logical function division, and, in practice, the unit division may be implemented in other ways. For example, multiple units or components may be combined or may be integrated into another system, or some features may be omitted or not executed. In addition, coupling, direct coupling or communication connections between the presented or discussed components may be indirect coupling or communication connections, via interfaces, between devices or units, and may be electrical, mechanical or in other forms.

The above are merely embodiments of the present invention and are not intended to limit the present invention. It is easy for those skilled in the art to conceive modifications or substitutions within the technical scope of the present invention as long as these modifications or substitutions are within the scope of the protection of the present invention. Therefore, the protection scope of the present invention is solely defined by the appended claims.

### INDUSTRIAL APPLICABILITY

The running state of the temperature control apparatus is configured through the control terminal, or the running state of the temperature control apparatus is automatically configured, so the problems that the existing temperature controller needs to be manually configured and that the configuration process is troublesome are effectively solved.

## Claims

1. A method for controlling a fan coil, applied to a temperature control apparatus of a central air conditioner, wherein the temperature control apparatus is configured to be in a non-automatic working mode or in an automatic working mode, and **characterized by** comprising:
in a case where the temperature control apparatus is in a non-automatic working mode, receiving (S101) a configuration instruction, and configuring a running state of the temperature control apparatus according to the configuration instruction;
in a case where the temperature control apparatus is in an automatic working mode, collecting ambient temperature according to a set period; determining a change trend of the ambient temperature according to the collected ambient temperature; and configuring (S101) the running state of the temperature control apparatus according to the change trend of the ambient temperature; and
sending (S102) a control signal corresponding to the configured running state to the fan coil connected with the temperature control apparatus according to the configured running state so as to enable the fan coil to start an action corresponding to the running state;
wherein the running state comprises a cooling state, a heating state, and a ventilation state;
wherein the configuring (S101) the running state of the temperature control apparatus according to the change trend of the ambient temperature comprises:
in response to determining that the change trend of the ambient temperature is a decreasing trend, configuring the running state of the temperature control apparatus to the cooling state, and configuring a target cooling temperature;
in response to determining that the change trend of the ambient temperature is an increasing trend, configuring the running state of the temperature control apparatus to the heating state, and configuring a target heating temperature; and
in response to determining that the change trend of the ambient temperature is a flat trend, configuring the running state of the temperature control apparatus to the ventilation state.

2. The method of claim 1, wherein the determining a change trend of the ambient temperature according to the collected ambient temperature comprises:
acquiring collected ambient temperature at each of a plurality period nodes; and
determining the change trend of the ambient temperature according to the ambient temperature at the period nodes.

3. The method of claim 1, wherein the change trend of the ambient temperature is determined in one of following manners:
during a preset determining period, in response to determining that decreasing amplitude of the ambient temperature reaches a preset cooling threshold, the change trend of the ambient temperature is the decreasing trend;
during the preset determining period, in response to determining that increasing amplitude of the ambient temperature reaches a preset heating threshold, the change trend of the ambient temperature is the increasing trend; and
during the preset determining period, in response to determining that change amplitude of the ambient temperature is within a preset ventilation threshold range, the change trend of the ambient temperature is the flat trend.

4. The method of claim 1, wherein after the configuring the running state of the temperature control apparatus according to the change trend of the ambient temperature, the method further comprises:
configuring a working speed of a fan of the fan coil according to a difference in the decreasing trend or the increasing trend, wherein in the decreasing trend, the difference is a difference between currently acquired ambient temperature and the target cooling temperature, and in the increasing trend, the difference is a difference between the target heating temperature and the currently acquired ambient temperature.

5. The method of claim 4, wherein the configuring a working speed of a fan of the fan coil according to a difference comprises:
in response to determining that the difference is greater than a preset first temperature threshold, configuring the working speed of the fan to a third preset rate;
in response to determining that the difference is less than a preset second temperature threshold and not less than 0, configuring the working speed of the fan to a first preset rate; and
in response to determining that the difference is not less than the second temperature threshold and not greater than the first temperature threshold, configuring the working speed of the fan to a second preset rate; wherein the first preset rate is lower than the second preset rate, and the second preset rate is lower than the third preset rate; and the second temperature threshold is less than the first temperature threshold.

6. The method of claim 5, wherein the configuring a working speed of a fan of the fan coil according to a difference further comprises:
in response to determining that the difference is equal to 0, configuring a solenoid valve of the fan coil to be in a closed state; and
in response to determining that the difference is less than a preset third temperature threshold, configuring the fan to be in a closed state; wherein the third temperature threshold is less than 0.

7. The method of claim 6, wherein after the in response to determining that the difference is less than a preset third temperature threshold, configuring the fan to be in a closed state, the method further comprises:
in response to determining that the difference is greater than a preset fourth temperature threshold within preset time, configuring the solenoid valve to be in a switch-on state and the fan to be in a switch-on state; wherein the fourth temperature threshold is greater than 0.

8. The method of claim 1, further comprising:
determining running data of the temperature control apparatus, and sending the running data to a preset server, so that the server generates an analysis chart; and
sending state data of the temperature control apparatus to a control terminal having obtained control authority from the server.

9. The method of any one of claims 1 to 8, wherein the receiving a configuration instruction, and configuring a running state of the temperature control apparatus according to the configuration instruction comprises:
receiving the configuration instruction via a network, and parsing out a temperature control apparatus identifier from the configuration instruction; wherein the configuration instruction is any one of: a control instruction directly sent by the control terminal to the temperature control apparatus; or the control instruction of the control terminal forwarded by the server to the temperature control apparatus; and
in response to determining that the parsed temperature control apparatus identifier is consistent with a temperature control apparatus identifier of the temperature control apparatus, configuring the running state of the temperature control apparatus according to the configuration instruction.

10. The method of claim 9, wherein the temperature control apparatus identifier is a network address of the temperature control apparatus;
wherein before the receiving the configuration instruction via a network, and parsing out a temperature control apparatus identifier from the configuration instruction, the method further comprises:
reporting heartbeat data to the server, so that in response to reception of the control instruction of the control terminal, the server forwards the received control instruction of the control terminal to a temperature control apparatus according to a preset mapping table of hardware addresses and network addresses; wherein the heartbeat data carries a hardware address of the temperature control apparatus.

11. A temperature control apparatus of a central air conditioner, **characterized by** comprising a temperature collection module, a storage and a processor;
wherein the temperature collection module is configured to collect ambient temperature according to a set period;
wherein the temperature control apparatus is configured to be in a non-automatic working mode or in an automatic working mode;
wherein the storage is configured to store a fan coil control program, and the processor is configured to execute the fan coil control program to implement following steps:
in a case where the temperature control apparatus is in a non-automatic working mode, receiving a configuration instruction, and configuring a running state of the temperature control apparatus according to the configuration instruction;
in a case where the temperature control apparatus is in an automatic working mode, determining a change trend of the ambient temperature according to the collected ambient temperature; and configuring the running state of the temperature control apparatus according to the change trend of the ambient temperature; and
sending a control signal corresponding to the configured running state to a fan coil connected with the temperature control apparatus according to the configured running state so as to enable the fan coil to start an action corresponding to the running state;
wherein the running state comprises a cooling state, a heating state, and a ventilation state;
wherein the configuring the running state of the temperature control apparatus according to the change trend of the ambient temperature comprises:
in response to determining that the change trend of the ambient temperature is a decreasing trend, configuring the running state of the temperature control apparatus to the cooling state, and configuring a target cooling temperature;
in response to determining that the change trend of the ambient temperature is an increasing trend, configuring the running state of the temperature control apparatus to the heating state, and configuring a target heating temperature; and
in response to determining that the change trend of the ambient temperature is a flat trend, configuring the running state of the temperature control apparatus to the ventilation state.

12. The temperature control apparatus of claim 11, wherein the determining a change trend of the ambient temperature according to the collected ambient temperature comprises:
acquiring collected ambient temperature at each of a plurality of period nodes; and
determining the change trend of the ambient temperature according to the ambient temperature at the period nodes.

13. A computer-readable storage medium for storing a fan coil control program which, when executed by at least one processor of the temperature control apparatus of claim 11, implements the steps of the method of any one of claims 1 to 10.

## Patentansprüche

1. Verfahren zur Steuerung einer Gebläsespule, angewendet auf eine Temperatursteuerungseinrichtung einer zentralen Klimatisierungsanlage, wobei die Temperatursteuerungseinrichtung derart konfiguriert ist, dass sie sich in einem nicht automatischen Arbeitsmodus oder in einem automatischen Arbeitsmodus befindet, und **dadurch gekennzeichnet, dass** es Folgendes umfasst:
in einem Fall, in dem sich die Temperatursteuerungseinrichtung in einem nicht automatischen Arbeitsmodus befindet, Empfangen (S101) einer Konfigurationsanweisung und Konfigurieren eines Betriebszustands der Temperatursteuerungseinrichtung gemäß der Konfigurationsanweisung;
in einem Fall, in dem sich die Temperatursteuerungseinrichtung in einem automatischen Arbeitsmodus befindet, Erfassen von Umgebungstemperatur gemäß einer eingestellten Periode; Bestimmen eines Änderungstrends der Umgebungstemperatur gemäß der erfassten Umgebungstemperatur; und Konfigurieren (S101) des Betriebszustands der Temperatursteuerungseinrichtung gemäß dem Änderungstrend der Umgebungstemperatur; und
Senden (S102) eines dem konfigurierten Betriebszustand entsprechenden Steuersignals an die mit der Temperatursteuerungseinrichtung verbundene Gebläsespule gemäß dem konfigurierten Betriebszustand, um der Gebläsespule Starten einer dem Betriebszustand entsprechenden Aktion zu ermöglichen;
wobei der Betriebszustand einen Kühlungszustand, einen Heizungszustand und einen Lüftungszustand umfasst;
wobei das Konfigurieren (S101) des Betriebszustands der Temperatursteuerungseinrichtung gemäß dem Änderungstrend der Umgebungstemperatur Folgendes umfasst:
als Reaktion auf Bestimmen, dass der Änderungstrend der Umgebungstemperatur ein abfallender Trend ist, Konfigurieren des Betriebszustands der Temperatursteuerungseinrichtung mit dem Kühlungszustand und Konfigurieren einer Soll-Kühlungstemperatur;
als Reaktion auf Bestimmen, dass der Änderungstrend der Umgebungstemperatur ein ansteigender Trend ist, Konfigurieren des Betriebszustands der Temperatursteuerungseinrichtung mit dem Heizungszustand und Konfigurieren einer Soll-Heizungstemperatur; und
als Reaktion auf Bestimmen, dass der Änderungstrend der Umgebungstemperatur ein flacher Trend ist, Konfigurieren des Betriebszustands der Temperatursteuerungseinrichtung mit dem Lüftungszustand.

2. Verfahren nach Anspruch 1, wobei das Bestimmen eines Änderungstrends der Umgebungstemperatur gemäß der erfassten Umgebungstemperatur Folgendes umfasst:
Erlangen von erfasster Umgebungstemperatur an jedem einer Vielzahl Periodenknoten; und
Bestimmen des Änderungstrends der Umgebungstemperatur gemäß der Umgebungstemperatur an den Periodenknoten.

3. Verfahren nach Anspruch 1, wobei der Änderungstrend der Umgebungstemperatur auf eine der folgenden Weisen bestimmt wird:
während eines voreingestellten Bestimmungszeitraums ist der Änderungstrend der Umgebungstemperatur als Reaktion auf Bestimmen, dass eine abfallende Amplitude der Umgebungstemperatur einen voreingestellten Kühlungsschwellenwert erreicht, der abfallende Trend;
während des voreingestellten Bestimmungszeitraums ist der Änderungstrend der Umgebungstemperatur als Reaktion auf Bestimmen, dass eine ansteigende Amplitude der Umgebungstemperatur einen voreingestellten Heizungsschwellenwert erreicht, der ansteigende Trend; und
während des voreingestellten Bestimmungszeitraums ist der Änderungstrend der Umgebungstemperatur als Reaktion auf Bestimmen, dass eine Änderungsamplitude der Umgebungstemperatur innerhalb eines voreingestellten Lüftungsschwellenwertbereichs liegt, der flache Trend.

4. Verfahren nach Anspruch 1, wobei nach dem Konfigurieren des Betriebszustands der Temperatursteuerungseinrichtung gemäß dem Änderungstrend der Umgebungstemperatur das Verfahren ferner Folgendes umfasst:
Konfigurieren einer Arbeitsdrehzahl eines Gebläses der Gebläsespule gemäß einem Unterschied bei dem abfallenden Trend oder dem ansteigenden Trend, wobei der Unterschied bei dem abfallenden Trend ein Unterschied zwischen aktuell erlangter Umgebungstemperatur und der Soll-Kühlungstemperatur ist, und der Unterschied bei dem ansteigenden Trend der Unterschied zwischen der Soll-Heizungstemperatur und der aktuell erlangten Umgebungstemperatur ist.

5. Verfahren nach Anspruch 4, wobei das Konfigurieren einer Arbeitsdrehzahl eines Gebläses der Gebläsespule gemäß einem Unterschied Folgendes umfasst:
als Reaktion auf Bestimmen, dass der Unterschied größer als ein voreingestellter erster Temperaturschwellenwert ist, Konfigurieren der Arbeitsdrehzahl des Gebläses mit einer dritten voreingestellten Rate;
als Reaktion auf Bestimmen, dass der Unterschied kleiner als ein voreingestellter zweiter Temperaturschwellenwert und nicht kleiner als 0 ist, Konfigurieren der Arbeitsdrehzahl des Gebläses mit einer ersten voreingestellten Rate; und
als Reaktion auf Bestimmen, dass der Unterschied nicht kleiner als der zweite Temperaturschwellenwert und nicht größer als der erste Temperaturschwellewert ist, Konfigurieren der Arbeitsdrehzahl des Gebläses mit einer zweiten voreingestellten Rate; wobei die erste voreingestellte Rate kleiner als die zweite voreingestellte Rate ist und die zweite voreingestellte Rate kleiner als die dritte voreingestellte Rate ist; und der zweite Temperaturschwellenwert kleiner als der erste Temperaturschwellenwert ist.

6. Verfahren nach Anspruch 5, wobei das Konfigurieren einer Arbeitsdrehzahl eines Gebläses der Gebläsespule gemäß einem Unterschied ferner Folgendes umfasst:
als Reaktion auf Bestimmen, dass der Unterschied gleich 0 ist, Konfigurieren eines Magnetventils der Gebläsespule, sich in einem geschlossenen Zustand zu befinden; und
als Reaktion auf Bestimmen, dass der Unterschied kleiner als ein voreingestellter dritter Temperaturschwellenwert ist, Konfigurieren des Gebläses, sich in einem geschlossenen Zustand zu befinden; wobei der dritte Temperaturschwellenwert kleiner als 0 ist.

7. Verfahren nach Anspruch 6, wobei nach dem Konfigurieren des Gebläses, sich in einem geschlossenen Zustand zu befinden, als Reaktion auf Bestimmen, dass der Unterschied kleiner als ein voreingestellter dritter Temperaturschwellenwert ist, das Verfahren ferner Folgendes umfasst:
als Reaktion auf Bestimmen, dass der Unterschied innerhalb eines voreingestellten Zeitraums größer als ein voreingestellter vierter Temperaturschwellenwert ist, Konfigurieren des Magnetventils, sich in einem Einschaltzustand zu befinden, und des Lüfters, sich in einem Einschaltzustand zu befinden; wobei der vierte Temperaturschwellenwert größer als 0 ist.

8. Verfahren nach Anspruch 1, ferner umfassend:
Bestimmen von Betriebsdaten der Temperatursteuerungseinrichtung und Senden der Betriebsdaten an einen voreingestellten Server, sodass der Server ein Analysediagramm erzeugt; und
Senden von Zustandsdaten der Temperatursteuerungseinrichtung an ein Steuerungsendgerät, das eine Steuerungsberechtigung von dem Server erhalten hat.

9. Verfahren nach einem der Ansprüche 1 bis 8, wobei das Empfangen einer Konfigurationsanweisung und Konfigurieren eines Betriebszustands der Temperatursteuerungseinrichtung gemäß der Konfigurationsanweisung Folgendes umfasst:
Empfangen der Konfigurationsanweisung über ein Netzwerk und Parsen einer Kennung der Temperatursteuerungseinrichtung aus der Konfigurationsanweisung; wobei die Konfigurationsanweisung eine beliebige ist von: einer Steuerungsanweisung, die direkt von dem Steuerungsendgerät an die Temperatursteuerungseinrichtung gesendet wird; oder der Steuerungsanweisung des Steuerungsendgeräts, die von dem Server an die Temperatursteuerungseinrichtung weitergeleitet wird; und
als Reaktion auf Bestimmen, dass die geparste Kennung der Temperatursteuerungseinrichtung mit einer Kennung der Temperatursteuerungseinrichtung der Temperatursteuerungseinrichtung übereinstimmt, Konfigurieren des Betriebszustands der Temperatursteuerungseinrichtung gemäß der Konfigurationsanweisung.

10. Verfahren nach Anspruch 9, wobei die Kennung der Temperatursteuerungseinrichtung eine Netzwerkadresse der Temperatursteuerungseinrichtung ist;
wobei das Verfahren vor dem Empfangen der Konfigurationsanweisung über ein Netzwerk und Parsen einer Kennung der Temperatursteuerungseinrichtung aus der Konfigurationsanweisung ferner Folgendes umfasst:
Melden von Heartbeat-Daten an den Server, sodass der Server als Reaktion auf Empfang der Steuerungsanweisung des Steuerungsendgeräts die empfangene Steuerungsanweisung des Steuerungsendgeräts an eine Temperatursteuerungseinrichtung gemäß einer voreingestellten Abbildungstabelle von Hardware-Adressen und Netzwerkadressen weiterleitet; wobei die Heartbeat-Daten eine Hardware-Adresse der Temperatursteuerungseinrichtung tragen.

11. Temperatursteuerungseinrichtung einer zentralen Klimatisierungsanlage, **gekennzeichnet durch** Umfassen eines Temperaturerfassungsmoduls, eines Speichers und eines Prozessors;
wobei das Temperaturerfassungsmodul derart konfiguriert ist, dass es Umgebungstemperatur gemäß einer eingestellten Periode erfasst;
wobei die Temperatursteuerungseinrichtung derart konfiguriert ist, dass sie sich in einem nicht automatischen Arbeitsmodus oder in einem automatischen Arbeitsmodus befindet;
wobei der Speicher derart konfiguriert ist, dass er ein Gebläsespulensteuerungsprogramm speichert, und der Prozessor derart konfiguriert ist, dass er das Gebläsespulensteuerungsprogramm zum Implementieren der folgenden Schritte ausführt:
in einem Fall, in dem sich die Temperatursteuerungseinrichtung in einem nicht automatischen Arbeitsmodus befindet, Empfangen einer Konfigurationsanweisung und Konfigurieren eines Betriebszustands der Temperatursteuerungseinrichtung gemäß der Konfigurationsanweisung;
in einem Fall, in dem sich die Temperatursteuerungseinrichtung in einem automatischen Arbeitsmodus befindet, Bestimmen eines Änderungstrends der Umgebungstemperatur gemäß der erfassten Umgebungstemperatur; und Konfigurieren des Betriebszustands der Temperatursteuerungseinrichtung gemäß dem Änderungstrend der Umgebungstemperatur; und
Senden eines dem konfigurierten Betriebszustand entsprechenden Steuersignals an eine mit der Temperatursteuerungseinrichtung verbundene Gebläsespule gemäß dem konfigurierten Betriebszustand, um der Gebläsespule den Start einer dem Betriebszustand entsprechenden Aktion zu ermöglichen;
wobei der Betriebszustand einen Kühlungszustand, einen Heizungszustand und einen Lüftungszustand umfasst;
wobei das Konfigurieren des Betriebszustands der Temperatursteuerungseinrichtung gemäß dem Änderungstrend der Umgebungstemperatur Folgendes umfasst:
als Reaktion auf Bestimmen, dass der Änderungstrend der Umgebungstemperatur ein abfallender Trend ist, Konfigurieren des Betriebszustands der Temperatursteuerungseinrichtung mit dem Kühlungszustand und Konfigurieren einer Soll-Kühlungstemperatur;
als Reaktion auf Bestimmen, dass der Änderungstrend der Umgebungstemperatur ein ansteigender Trend ist, Konfigurieren des Betriebszustands der Temperatursteuerungseinrichtung mit dem Heizungszustand und Konfigurieren einer Soll-Heizungstemperatur; und
als Reaktion auf Bestimmen, dass der Änderungstrend der Umgebungstemperatur ein flacher Trend ist, Konfigurieren des Betriebszustands der Temperatursteuerungseinrichtung mit dem Lüftungszustand.

12. Temperatursteuerungseinrichtung nach Anspruch 11, wobei das Bestimmen eines Änderungstrends der Umgebungstemperatur gemäß der erfassten Umgebungstemperatur Folgendes umfasst:
Erlangen von erfasster Umgebungstemperatur an jedem einer Vielzahl von Periodenknoten; und
Bestimmen des Änderungstrends der Umgebungstemperatur gemäß der Umgebungstemperatur an den Periodenknoten.

13. Computerlesbares Speichermedium zum Speichern eines Gebläsespulensteuerungsprogramms, das, wenn es von mindestens einem Prozessor der Temperatursteuerungseinrichtung nach Anspruch 11 ausgeführt wird, die Schritte des Verfahrens nach einem der Ansprüche 1 bis 10 implementiert.

## Revendications

1. Procédé de commande d'un ventilo-convecteur, appliqué à un appareil de régulation de température d'un climatiseur central, dans lequel l'appareil de régulation de température est configuré pour être dans un mode de fonctionnement non automatique ou dans un mode de fonctionnement automatique, et **caractérisé en ce qu'**il comprend :
dans un cas où l'appareil de régulation de température est dans un mode de fonctionnement non automatique, la réception (S101) d'une instruction de configuration, et la configuration d'un état de fonctionnement de l'appareil de régulation de température selon l'instruction de configuration ;
dans un cas où l'appareil de régulation de température est dans un mode de fonctionnement automatique, la collecte de la température ambiante selon une période définie ; la détermination d'une évolution de la température ambiante selon la température ambiante collectée ; et la configuration (S101) de l'état de fonctionnement de l'appareil de régulation de température selon l'évolution de la température ambiante ; et
l'envoi (S102) d'un signal de commande correspondant à l'état de fonctionnement configuré au ventilo-convecteur connecté à l'appareil de régulation de température selon l'état de fonctionnement configuré de manière à permettre au ventilo-convecteur de démarrer une action correspondant à l'état de fonctionnement ;
dans lequel l'état de fonctionnement comprend un état de refroidissement, un état de chauffage et un état de ventilation ;
dans lequel la configuration (S101) de l'état de fonctionnement de l'appareil de régulation de température selon l'évolution de la température ambiante comprend :
en réponse à la détermination que l'évolution de la température ambiante est une évolution à la baisse, la configuration de l'état de fonctionnement de l'appareil de régulation de température dans l'état de refroidissement, et la configuration d'une température de refroidissement cible ;
en réponse à la détermination que l'évolution de la température ambiante est une évolution à la hausse, la configuration de l'état de fonctionnement de l'appareil de régulation de température dans l'état de chauffage, et la configuration d'une température de chauffage cible ; et
en réponse à la détermination que l'évolution de la température ambiante est une évolution plate, la configuration de l'état de fonctionnement de l'appareil de régulation de température dans l'état de ventilation.

2. Procédé selon la revendication 1, dans lequel la détermination d'une évolution de la température ambiante selon la température ambiante collectée comprend :
l'acquisition de la température ambiante collectée au niveau de chacun d'une pluralité de noeuds de période ; et
la détermination de l'évolution de la température ambiante selon la température ambiante au niveau des noeuds de période.

3. Procédé selon la revendication 1, dans lequel l'évolution de la température ambiante est déterminée de l'une des manières suivantes :
pendant une période de détermination prédéterminée, en réponse à la détermination que l'amplitude décroissante de la température ambiante atteint un seuil de refroidissement prédéterminé, l'évolution de la température ambiante est l'évolution décroissante ;
pendant la période de détermination prédéterminée, en réponse à la détermination que l'amplitude croissante de la température ambiante atteint un seuil de chauffage prédéterminé, l'évolution de la température ambiante est l'évolution croissante ; et
pendant la période de détermination prédéfinie, en réponse à la détermination que l'amplitude de changement de la température ambiante est dans une plage de seuil de ventilation prédéfinie, l'évolution de la température ambiante est l'évolution plate.

4. Procédé selon la revendication 1, dans lequel, après la configuration de l'état de fonctionnement de l'appareil de régulation de température selon l'évolution de la température ambiante, le procédé comprend également :
la configuration d'une vitesse de fonctionnement d'un ventilateur du ventilo-convecteur selon une différence dans l'évolution à la baisse ou l'évolution à la hausse, dans lequel la différence est, dans l'évolution à la baisse, une différence entre la température ambiante actuellement acquise et la température de refroidissement cible, et dans l'évolution à la hausse, la différence est une différence entre la température de chauffage cible et la température ambiante actuellement acquise.

5. Procédé selon la revendication 4, dans lequel la configuration d'une vitesse de fonctionnement d'un ventilateur du ventilo-convecteur selon une différence comprend :
en réponse à la détermination que la différence est supérieure à un premier seuil de température prédéfini, la configuration de la vitesse de fonctionnement du ventilateur sur une troisième vitesse prédéfinie ;
en réponse à la détermination que la différence est inférieure à un second seuil de température prédéfini et supérieure ou égale à 0, la configuration de la vitesse de fonctionnement du ventilateur à une première vitesse prédéfinie ; et
en réponse à la détermination que la différence n'est pas inférieure au second seuil de température et n'est pas supérieure au premier seuil de température, la configuration de la vitesse de fonctionnement du ventilateur à une deuxième vitesse prédéfinie ; dans lequel la première vitesse prédéfinie est inférieure à la deuxième vitesse prédéfinie, et la deuxième vitesse prédéfinie est inférieure à la troisième vitesse prédéfinie ; et le second seuil de température est inférieur au premier seuil de température.

6. Procédé selon la revendication 5, dans lequel la configuration d'une vitesse de fonctionnement d'un ventilateur du ventilo-convecteur selon une différence comprend également :
en réponse à la détermination que la différence est égale à 0, la configuration d'une électrovanne du ventilo-convecteur pour être dans un état fermé ; et
en réponse à la détermination que la différence est inférieure à un troisième seuil de température prédéfini, la configuration du ventilateur pour qu'il soit dans un état fermé ; dans lequel le troisième seuil de température est inférieur à 0.

7. Procédé selon la revendication 6, dans lequel après la réponse à la détermination que la différence est inférieure à un troisième seuil de température prédéfini, la configuration du ventilateur pour qu'il soit dans un état fermé, le procédé comprend également :
en réponse à la détermination que la différence est supérieure à un quatrième seuil de température prédéfini dans un temps prédéfini, la configuration de l'électrovanne pour qu'elle soit dans un état de mise en marche et le ventilateur pour qu'il soit dans un état de mise en marche ; dans lequel le quatrième seuil de température est supérieur à 0.

8. Procédé selon la revendication 1, comprenant également :
la détermination de données de fonctionnement de l'appareil de régulation de température, et l'envoi de données de fonctionnement à un serveur prédéfini, de sorte que le serveur génère un diagramme d'analyse ; et
l'envoi de données d'état de l'appareil de régulation de température à un terminal de commande ayant obtenu une autorité de commande du serveur.

9. Procédé selon l'une quelconque des revendications 1 à 8, dans lequel la réception d'une instruction de configuration et la configuration d'un état de fonctionnement de l'appareil de régulation de température selon l'instruction de configuration, comprennent :
la réception de l'instruction de configuration par le biais d' un réseau, et l'analyse d'un identifiant d'appareil de régulation de température à partir de l'instruction de configuration ; dans lequel l'instruction de configuration est l'une quelconque parmi : une instruction de commande directement envoyée par le terminal de commande à l'appareil de régulation de température ; ou l'instruction de commande du terminal de commande transmise par le serveur à l'appareil de régulation de température ; et
en réponse à la détermination que l'identifiant d'appareil de régulation de température analysé est cohérent avec un identifiant d'appareil de régulation de température de l'appareil de régulation de température, la configuration de l'état de fonctionnement de l'appareil de régulation de température selon l'instruction de configuration.

10. Procédé selon la revendication 9, dans lequel l'identifiant d'appareil de régulation de température est une adresse réseau de l'appareil de régulation de température ;
dans lequel, avant la réception de l'instruction de configuration par le biais d'un réseau, et l'analyse d'un identifiant d'appareil de régulation de température à partir de l'instruction de configuration, le procédé comprend également :
le rapport de données de pulsation au serveur, de sorte qu'en réponse à la réception de l'instruction de commande du terminal de commande, le serveur transmet l'instruction de commande reçue du terminal de commande à un appareil de régulation de température selon une table de mise en correspondance prédéfinie d'adresses matérielles et d'adresses de réseau ; dans lequel les données de pulsation transportent une adresse matérielle de l'appareil de régulation de température.

11. Appareil de régulation de température d'un climatiseur central, **caractérisé en ce qu'**il comprend un module de collecte de température, une mémoire et un processeur ;
dans lequel le module de collecte de température est configuré pour collecter la température ambiante selon une période de consigne ;
dans lequel l'appareil de régulation de température est configuré pour être dans un mode de fonctionnement non automatique ou dans un mode de fonctionnement automatique ;
dans lequel la mémoire est configurée pour stocker un programme de commande de ventilo-convecteur, et le processeur est configuré pour exécuter le programme de commande de ventilo-convecteur pour mettre en oeuvre les étapes suivantes :
dans un cas où l'appareil de régulation de température est dans un mode de fonctionnement non automatique, la réception d'une instruction de configuration, et la configuration d'un état de fonctionnement de l'appareil de régulation de température selon l'instruction de configuration ;
dans un cas où l'appareil de régulation de température est dans un mode de fonctionnement automatique, la détermination d'une évolution de la température ambiante selon la température ambiante collectée ; et la configuration de l'état de fonctionnement de l'appareil de régulation de température selon l'évolution de la température ambiante ; et
l'envoi d'un signal de commande correspondant à l'état de fonctionnement configuré à un ventilo-convecteur connecté à l'appareil de régulation de température selon l'état de fonctionnement configuré de manière à permettre au ventilo-convecteur de démarrer une action correspondant à l'état de fonctionnement ;
dans lequel l'état de fonctionnement comprend un état de refroidissement, un état de chauffage et un état de ventilation ;
dans lequel la configuration de l'état de fonctionnement de l'appareil de régulation de température selon l'évolution de la température ambiante comprend :
en réponse à la détermination que l'évolution de la température ambiante est une évolution à la baisse, la configuration de l'état de fonctionnement de l'appareil de régulation de température dans l'état de refroidissement, et la configuration d'une température de refroidissement cible ;
en réponse à la détermination que l'évolution de la température ambiante est une évolution à la hausse, la configuration de l'état de fonctionnement de l'appareil de régulation de température dans l'état de chauffage, et la configuration d'une température de chauffage cible ; et
en réponse à la détermination que l'évolution de la température ambiante est une évolution plate, la configuration de l'état de fonctionnement de l'appareil de régulation de température dans l'état de ventilation.

12. Appareil de régulation de température selon la revendication 11, dans lequel la détermination d'une évolution de la température ambiante selon la température ambiante collectée comprend :
l'acquisition de la température ambiante collectée au niveau de chacun d'une pluralité de noeuds de période ; et
la détermination de l'évolution de la température ambiante selon la température ambiante au niveau des noeuds de période.

13. Support de stockage lisible par ordinateur pour stocker un programme de commande de ventilo-convecteur qui, lorsqu'il est exécuté par au moins un processeur de l'appareil de régulation de température selon la revendication 11, met en oeuvre les étapes du procédé selon l'une quelconque des revendications 1 à 10.
